# EUROPÄISCHE PATENTANMELDUNG

(11) **EP 2 149 416 A2**
(43) Veröffentlichungstag der Anmeldung: **03.02.2010**
(21) Anmeldenummer: 09166736.0
(22) Anmeldetag: 29.07.2009
(51) Int. Cl.: B23D 45/06, B23D 47/02, B27B 5/18

(54) **Druckbalkensäge**

(30) Priorität: 01.08.2008 DE 102008036912
(71) Anmelder: Reich Spezialmaschinen GmbH, 72622 Nürtingen (DE)
(72) Erfinder: Baumschlager, Otmar, 4572 St. Pankraz (AT); Lorber, Denis, 72663 Großbettlingen (DE)
(74) Vertreter: Boehme, Ulrich

(57) **Zusammenfassung**

Die Erfindung betrifft eine Druckbalkensäge zum Aufteilen plattenförmiger Werkstücke, mit einem einen Sägespalt (16) aufweisenden Sägetisch (14), an dem ein Transportwagen (18) mit mindestens einer Sägeeinheit entlang des Sägespaltes verfahrbar gelagert ist, sowie mit einem in vertikaler Richtung hin und her bewegbaren Druckbalken zum Fixieren der Werkstücke auf dem Sägetisch während des Aufteilens, und mit mindestens einem seitlich vom Sägetisch abstehenden Auflagetisch (50,52,54). Um die Druckbalkensäge derart weiterzubilden, dass die Gefahr einer Beschädigung des Werkstückes verringert wird, wird vorgeschlagen, dass eine Werkstückauflage des Sägetisches und/oder des mindestens einen Auflagetisches unter Einsatz eines Glas-, Keramik- und/oder Steinmaterial gefertigt ist.

## Beschreibung

Die Erfindung betrifft eine Druckbalkensäge zum Aufteilen plattenförmiger Werkstücke, mit einem einen Sägespalt aufweisenden Sägetisch, an dem ein Transportwagen mit mindestens einer Sägeeinheit entlang des Sägespaltes verfahrbar gelagert ist, sowie mit einem in vertikaler Richtung hin und her bewegbaren Druckbalken zum Fixieren der Werkstücke auf dem Sägetisch während des Aufteilens, und mit mindestens einem seitlich vom Sägetisch abstehenden Auflagetisch.

Derartige Druckbalkensägen kommen zum Aufteilen plattenförmiger Werkstücke, insbesondere Holz- oder Kunststoffplatten, zum Einsatz. Die Werkstücke können hierzu auf dem Sägetisch fixiert werden mittels des in vertikaler Richtung hin und her bewegbaren Druckbalkens, und anschließend kann durch Verfahren des Transportwagens mit Hilfe der mindestens einen Sägeeinheit ein Sägeschnitt vorgenommen werden. Das aufgetrennte Werkstück wird dann von dem mindestens einen seitlich neben dem Sägetisch angeordneten Auflagetisch übernommen, von wo aus es zur Vornahme weiterer Sägeschnitte auf dem Sägetisch neu positioniert werden oder aber zum Abtransport zwischengelagert werden kann.

Der Sägetisch und der mindestens eine Auflagetisch weisen üblicherweise eine Werkstückauflage in Form einer Metallplatte auf. Deren Oberseite unterliegt während des Betriebes der Druckbalkensäge einem nicht unbeachtlichen Verschleiß. Dies führt dazu, dass die Oberseite der Werkstückauflage aufraut und dadurch das Werkstück abrasiv belastet. Es besteht insbesondere die Gefahr, dass die Kanten des Werkstückes von der Werkstückauflage beschädigt werden.

Aufgabe der vorliegenden Erfindung ist es, eine Druckbalkensäge der eingangs genannten Art derart weiterzubilden, dass die Gefahr einer Beschädigung des Werkstückes verringert wird.

Diese Aufgabe wird bei einer Druckbalkensäge der gattungsgemäßen Art erfindungsgemäß dadurch gelöst, dass die Werkstückauflage des Sägetisches und/oder des mindestens einen Auflagetisches unter Einsatz eines Glas-, Keramik- und/oder Steinmaterials gefertigt ist. Das Glas-, Keramik- oder Steinmaterial, das beispielsweise geschliffen sein kann, ermöglicht eine sehr abriebfeste Ausgestaltung der Werkstückauflage. Dadurch besteht praktisch keine Gefahr mehr, dass die Werkstückauflage das Werkstück, insbesondere die Werkstückkanten, beeinträchtigt. Die Werkstückauflage lässt sich vielmehr sehr glatt ausbilden, so dass das Werkstück mit verhältnismäßig geringen Kräften auf der Werkstückauflage verschoben werden kann, ohne dass dies zu einer Beschädigung des Werkstückes führt.

Es kann vorgesehen sein, dass die Druckbalkensäge eine Vielzahl von drehbar gelagerten Stützrollen aufweist, die jeweils eine Werkstückauflage in Form eines Mantels aus Glas-, Keramik- und/oder Steinmaterial umfassen.

Bevorzugt ist die Werkstückauflage plattenförmig ausgestaltet, so dass das Werkstück flächig auf der Oberseite der Werkstückauflage aufliegen kann.

Von besonderem Vorteil ist es, wenn die Werkstückauflage als Glasplatte ausgestaltet ist. Dies ermöglicht eine kostengünstige Herstellung der Werkstückauflage, und auch die Montage der Werkstückauflage gestaltet sich verhältnismäßig einfach.

Die Werkstückauflage kann aus mehreren schichtförmig übereinander angeordneten und miteinander verbundenen Einzelplatten aus Glas-, Keramik-und/oder Steinmaterial gefertigt sein. Dadurch kann eine sehr hohe mechanische Stabilität erzielt werden. Außerdem kann eine verhältnismäßig dicke Werkstückauflage, insbesondere eine dicke Glasplatte, kostengünstig aus mehreren Einzelplatten hergestellt werden.

Bevorzugt wird für die Herstellung der Werkstückauflage technisches Sicherheitsglas verwendet. Derartiges Glasmaterial ist dem Fachmann an sich bekannt, es kann kostengünstig bezogen werden.

Bei einer bevorzugten Ausgestaltung der erfindungsgemäßen Druckbalkensäge umfasst der Sägetisch und/oder der mindestens eine Auflagetisch ein Tragteil, das beispielsweise aus Metall oder einem Kunststoffmaterial gefertigt sein kann und das die Werkstückauflage trägt. Bei der Montage der Druckbalkensäge kann das Tragteil an einem Gestell oder einer Stützvorrichtung montiert werden, und anschließend kann auf dem Tragteil die Werkstückauflage befestigt werden.

Bevorzugt ist die Werkstückauflage mit dem Tragteil verklebt, denn dies vereinfacht die Montage der Werkstückauflage am Tragteil.

Alternativ kann vorgesehen sein, dass die Werkstückauflage mit dem Tragteil lösbar verbunden ist. Insbesondere kann vorgesehen sein, dass die Werkstückauflage mit dem Tragteil verspannt oder verschraubt ist.

Um die Reibung zwischen dem Werkstück und der Werkstückauflage zusätzlich zu verringern, weist die Werkstückauflage bei einer bevorzugten Ausgestaltung der Erfindung Luftaustrittsöffnungen auf, die mit einem Strömungskanal verbunden sind, der mit Druckluft beaufschlagbar ist. Dadurch kann zwischen dem Werkstück und der Werkstückauflage ein Luftpolster ausgebildet werden, so dass das Werkstück mit sehr geringem Kraftaufwand verschoben werden kann. Der Strömungskanal kann an eine Druckluftquelle angeschlossen werden, so dass Druckluft über den Strömungskanal und die Luftaustrittsöffnungen ausströmen kann.

Der Strömungskanal kann von einem Tragteil definiert werden, auf dem die Werkstückauflage fixierbar ist. Das Tragteil und die Werkstückauflage können fluchtend zueinander ausgerichtete Bohrungen aufweisen. Über die Bohrungen kann die dem Strömungskanal zugeführte Druckluft entweichen zur Ausbildung eines Luftpolsters zwischen dem Werkstück und der Werkstückauflage.

Die nachfolgende Beschreibung einer bevorzugten Ausführungsform der Erfindung dient im Zusammenhang mit der Zeichnung der näheren Erläuterung. Es zeigen:

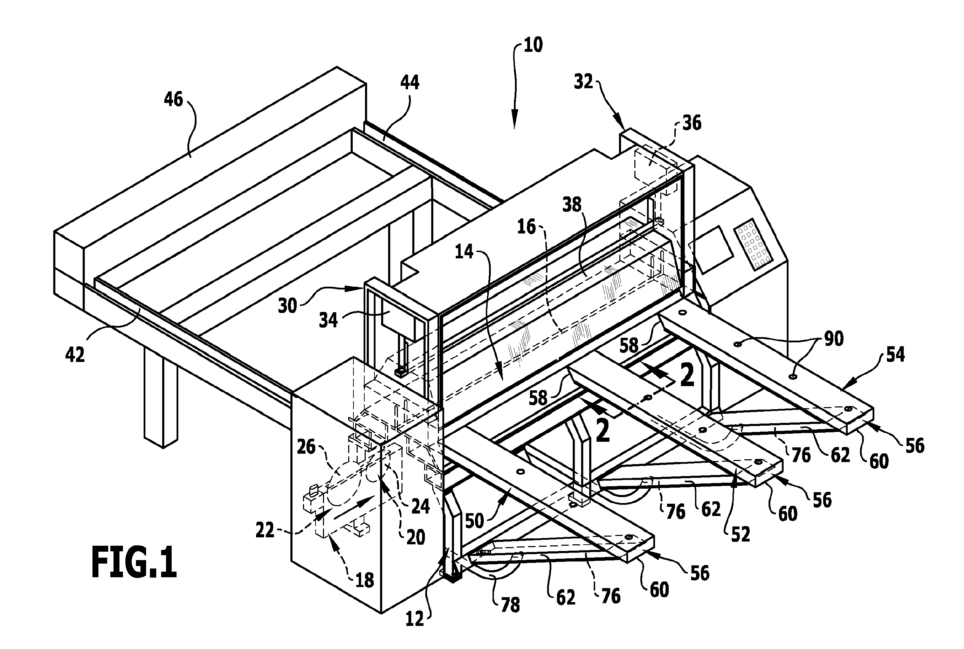

- Figur 1:: eine schaubildliche Darstellung einer erfindungsgemäßen Druckbalkensäge und
- Figur 2:: eine Schnittansicht längs der Linie 2-2 in Figur 1.

In der Zeichnung ist schematisch eine Druckbalkensäge 10 dargestellt mit einem Maschinengestell 12, das einen Sägetisch 14 mit einem Sägespalt 16 ausbildet. Unterhalb der Auflagefläche des Sägetisches 14 ist ein Transportwagen 18 entlang des Sägespaltes 16 linear verfahrbar am Maschinengestell 12 gehalten. Zum Verfahren und Positionieren des Transportwagens 18 kommt ein in der Zeichnung nicht dargestellter, an sich bekannter Antriebsmotor zum Einsatz. Der Transportwagen 18 trägt zwei Sägeeinheiten, nämlich eine Vorritzsäge 20 und eine Hauptsäge 22, die jeweils einen an sich bekannten und deshalb in der Zeichnung nicht dargestellten Antriebsmotor aufweisen, der ein Sägeblatt 24 bzw. 26 drehend antreibt. Die Vorritzsäge 20 und die Hauptsäge 22 sind in üblicher Weise in vertikaler Richtung verstellbar am Transportwagen 18 gehalten, so dass die zugeordneten Sägeblätter 24 bzw. 26 in einer oberen Stellung der Sägen 20, 22 den Sägespalt 16 zur Vornahme eines Sägeschnittes durchgreifen, wohingegen sie in einer unteren Stellung der Sägen 20, 22 unterhalb des Sägespaltes 16 angeordnet sind.

An einander gegenüberliegenden Stirnseiten trägt das Maschinengestell 12 jeweils einen Druckbalkenturm 30 bzw. 32, der eine Führungsanordnung 34 bzw. 36 aufnimmt. Mittels der Führungsanordnungen 34, 36 ist an den Druckbalkentürmen 30, 32 ein Druckbalken 38 in vertikaler Richtung verstellbar gehalten. Der Druckbalken 38 weist in üblicher Weise ein ungefähr C-förmiges Profil auf mit einer dem Sägespalt 16 zugewandten schlitzförmigen Öffnung, in die bei der Vornahme eines Sägeschnittes die verstellbar am Transportwagen 18 gehaltenen Sägeblätter 24, 26 eintreten können. Die Führungsanordnungen 34, 36 der beiden Druckbalkentürme 30, 32 umfassen in üblicher und deshalb in der Zeichnung nicht näher dargestellter Weise druckmittelbeaufschlagte Zylinder, mittels denen der Druckbalken 38 angehoben und abgesenkt werden kann.

Seitlich neben dem Sägetisch 14 weist die Druckbalkensäge 10 zwei parallel zueinander und senkrecht zum Sägespalt 16 ausgerichtete Führungsschienen auf, an denen eine Vorschubvorrichtung in Form eines Transportschlittens 46 verschiebbar gehalten ist. Der Transportschlitten 46 ist mittels eines an sich bekannten und deshalb in der Zeichnung nicht dargestellten Antriebs entlang der Führungsschienen 42, 44 hin und her verschiebbar.

Mit Hilfe des Transportschlittens 46 können plattenförmige Werkstücke, vorzugsweise Holzplatten, in Richtung auf den Sägespalt 16 verschoben werden. Hierzu können am Transportschlitten 46 an sich bekannte und deshalb zur Erzielung einer besseren Übersicht in der Zeichnung nicht dargestellte Greifzangen fixiert sein zum Ergreifen der Werkstücke, so dass diese auf einfache Weise mit Hilfe des Transportschlittens 46 in einer gewünschten Stellung auf dem Sägetisch 14 positioniert werden können. Anschließend können die Werkstücke mit Hilfe des Druckbalkens 38, der eine Niederhaltevorrichtung ausbildet, am Sägetisch 14 festgelegt werden, so dass dann mittels der Sägen 20 und 22 die Werkstücke aufgetrennt werden können.

Die aufgetrennten Werkstücke können anschließend auf Auflagetische 50, 52, 54 verschoben werden, die auf der dem Transportschlitten 46 abgewandten Seite vom Sägetisch 14 abstehen. Die Auflagetische 50, 52 und 54 sind identisch ausgestaltet und umfassen jeweils ein horizontal ausgerichtetes und hohl ausgebildetes Tragteil 56, das mit einem ersten Endbereich 58 am Sägetisch 14 gehalten ist und das an einem zweiten Endbereich 60 von einer Stützstrebe 62 abgestützt ist, die ebenfalls hohl ausgebildet ist und sich mit ihrem dem Tragteil 56 abgewandten Ende am Maschinengestell 12 abstützt. Alternativ kann das Tragteil 56 auch auf dem Boden abgestützt sein mittels vertikal ausgerichteter Stützen.

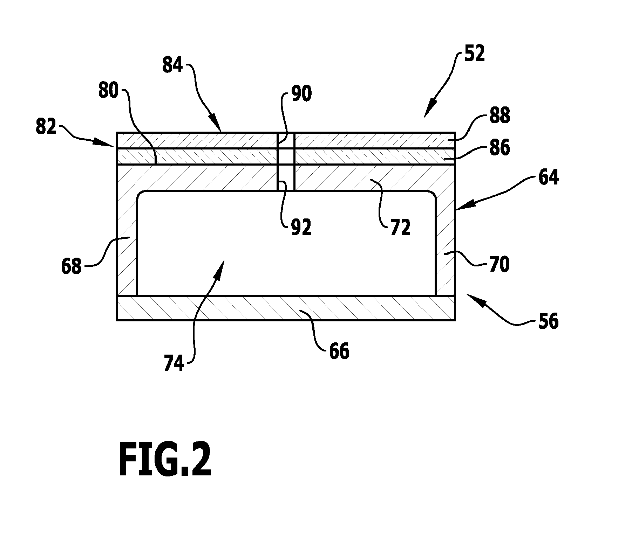

Wie insbesondere aus Figur 2 deutlich wird, wird das Tragteil 56 von einem im Querschnitt U-förmigen Profilteil 64 und einer Bodenplatte 66 gebildet. Das Profilteil 64 umfasst einen ersten Schenkel 68 und einen zweiten Schenkel 70, die über einen Steg 72 einstückig miteinander verbunden sind. Die Bodenplatte 66 überbrückt die beiden Schenkel 68 und 70, so dass zwischen dem Profilteil 64 und der Bodenplatte 66 ein Strömungskanal 74 ausgebildet wird. Die Stützstrebe 62 weist einen entsprechenden Strömungskanal 76 auf, der über einen Schlauch 78 an eine in der Zeichnung nicht dargestellte Druckluftquelle angeschlossen werden kann. Dies ermöglicht es, den Strömungskanal 74 des Tragteils 56 mit Druckluft zu beaufschlagen.

Das Tragteil 56 trägt auf der dem Strömungskanal 74 abgewandten Seite des Steges 72 eine Werkstückauflage 82, auf deren Oberseite ein Werkstück abgelegt werden kann. Die Werkstückauflage 82 ist im dargestellten Ausführungsbeispiel in Form einer Glasplatte 84 ausgebildet, die aus mehreren Einzelplatten schichtförmig zusammengesetzt ist, nämlich aus einer unteren Einzelplatte 86, die auf der Oberseite 80 des Tragteils 56 aufliegt, und einer oberen Einzelplatte 88, die das Werkstück aufnimmt. Die beiden Einzelplatten 86 und 88 sind miteinander verklebt und bestehen jeweils aus technischem Sicherheitsglas.

Alternativ zu einem Glasmaterial in Form der Glasplatte 84 könnte die Werkstückauflage 82 auch aus einem Keramik- oder Steinmaterial gefertigt sein.

Die Glasplatte 84 weist mehrere, im Abstand zueinander angeordnete Durchgangsbohrungen 90 auf, die jeweils mit einer korrespondierenden Durchgangsbohrung 92 des Profilteils 64 fluchten. Über die Durchgangsbohrungen 90 und 92 kann dem Strömungskanal 74 des Tragteils 56 zugeführte Druckluft aus dem Strömungskanal 74 herausströmen zur Ausbildung eines Luftpolsters zwischen der Glasplatte 84 und einem aufliegenden Werkstück. Die Ausbildung eines derartigen Luftpolsters ist allerdings nicht zwingend erforderlich, da die Glasplatte 84 bereits eine sehr glatte Oberfläche aufweist, so dass zwischen einem aufliegenden Werkstück und der Glasplatte 84 nur eine sehr geringe Reibung vorliegt. Durch Bereitstellung eines Luftpolsters kann jedoch der Kraftaufwand zum Verschieben eines Werkstückes noch zusätzlich reduziert werden.

Die Festlegung der Glasplatte 84 auf dem Tragteil 56 kann mittels einer Klebeverbindung erfolgen. Zusätzlich oder alternativ kann eine lösbare Verbindung zum Einsatz kommen, insbesondere eine Schraubverbindung.

Die Glasplatte 84 zeichnet sich durch eine äußerst abriebfeste und sehr glatte Oberseite aus. Dadurch kann die Gefahr gering gehalten werden, dass ein Werkstück beim Verschieben entlang eines Auflagetisches 50, 52, 54 beschädigt wird.

Entsprechend der Auflagetische 50, 52, 54 kann auch der Sägtisch 14 oberseitig eine Werkstückauflage in Form einer Glasplatte oder einer Keramik- oder Steinplatte aufweisen. Dies verleiht auch dem Sägetisch eine abriebfeste und sehr glatte Oberseite.

## Patentansprüche

1. Druckbalkensäge zum Aufteilen plattenförmiger Werkstücke, mit einem einen Sägespalt aufweisenden Sägetisch, an dem ein Transportwagen mit mindestens einer Sägeeinheit entlang des Sägespaltes verfahrbar gelagert ist, sowie mit einem in vertikaler Richtung hin und her bewegbaren Druckbalken zum Fixieren der Werkstücke auf dem Sägetisch während des Aufteilens, und mit mindestens einem seitlich vom Sägetisch abstehenden Auflagetisch, **dadurch gekennzeichnet, dass** eine Werkstückauflage (82) des Sägetisches (14) und/oder des mindestens einen Auflagetisches (50, 52, 54) unter Einsatz eines Glas-, Keramik- und/oder Steinmaterials gefertigt ist.

2. Druckbalkensäge nach Anspruch 1, **dadurch gekennzeichnet, dass** die Werkstückauflage (82) plattenförmig ausgestaltet ist.

3. Druckbalkensäge nach Anspruch 2, **dadurch gekennzeichnet, dass** die Werkstückauflage (82) als Glasplatte (84) ausgestaltet ist.

4. Druckbalkensäge nach einem der voranstehenden Ansprüche, **dadurch gekennzeichnet, dass** die Werkstückauflage (82) aus mehreren, schichtförmig übereinander angeordneten und miteinander verbundenen Einzelplatten (86, 88) aus Glas-, Keramik- und/oder Steinmaterial gefertigt ist.

5. Druckbalkensäge nach einem der voranstehenden Ansprüche, **dadurch gekennzeichnet, dass** der Sägetisch (14) und/oder der mindestens eine Auflagetisch (50, 52, 54) ein Tragteil (56) aufweist, das die Werkstückauflage (82) trägt.

6. Druckbalkensäge nach Anspruch 5, **dadurch gekennzeichnet, dass** die Werkstückauflage (82) mit dem Tragteil (56) verklebt ist.

7. Druckbalkensäge nach Anspruch 5, **dadurch gekennzeichnet, dass** die Werkstückauflage (82) mit dem Tragteil (56) lösbar verbunden ist.

8. Druckbalkensäge nach Anspruch 7, **dadurch gekennzeichnet, dass** die Werkstückauflage (82) mit dem Tragteil (56) verschraubt ist.

9. Druckbalkensäge nach einem der voranstehenden Ansprüche, **dadurch gekennzeichnet, dass** die Werkstückauflage (82) Luftaustrittsöffnungen (90) umfasst, die mit einem mit Druckluft beaufschlagbaren Strömungskanal (74) verbunden sind.
